## Europäisches Patentamt
## European Patent Office
## Office européen des brevets

(11) Numéro de publication: **0 275 792 B1**

(12) **FASCICULE DE BREVET EUROPEEN**

(45) Date de publication du fascicule du brevet:
01.08.90

(21) Numéro de dépôt: 87402985.3

(22) Date de dépôt: 24.12.87

(51) Int. Cl.⁵: **F16C 39/06**

(54) **Palier fluide hybride à raideur modifiée par effet électromagnétique.**

(30) Priorité: 31.12.86 FR 8618439

(43) Date de publication de la demande:
27.07.88 Bulletin 88/30

(45) Mention de la délivrance du brevet:
01.08.90 Bulletin 90/31

(84) Etats contractants désignés:
CH DE GB IT LI SE

(56) Documents cités:
EP-A- 0 054 617
EP-A- 0 071 456
EP-A- 0 151 857
FR-A- 2 379 732
US-A- 4 626 754

(73) Titulaire: SOCIETE DE MECANIQUE MAGNETIQUE,
B.P. 2282- 2 rue des Champs, F-27950 Saint-Marcel(FR)

(72) Inventeur: Habermann, Helmut, 63 rue de Bizy,
F-27200 Vernon(FR)

(74) Mandataire: Thévenet, Jean-Bruno et al, Cabinet BEAU
DE LOMENIE 55 rue d'Amsterdam, F-75008 Paris(FR)

## Description

La présente invention concerne un palier fluide hybride pour arbre rotatif soumis à des charges radiales, comprenant un corps fixe, une pièce tubulaire montée à l'intérieur du corps fixe et présentant un alésage intérieur qui définit une surface cylindrique de portée avec un léger jeu de base par rapport l'arbre, une série d'évidements formés dans la surface cylindrique de portée et répartis sur la circonférence de la pièce tubulaire, des moyens d'alimentation des évidements en fluide et d'évacuation du fluide hors des évidements, et des moyens d'étanchéité formés entre la pièce tubulaire et l'arbre de part et d'autre de la partie de la pièce tubulaire munie d'évidements.

Un palier fluide tel qu'un palier à gaz ou à huile et en particulier un palier hydrodynamique tend à transmettre au bâti une force proportionnelle d'une part à la raideur du palier et d'autre part à l'excentrement défini par la distance entre l'axe d'inertie du rotor et l'axe du palier. Or, quelle que soit la qualité de l'équilibrage du rotor, le balourd ne peut être complètement éliminé. La force transmise au bâti tend ainsi à créer au niveau de celui-ci des vibrations qui dans de nombreux cas s'avèrent préjudiciables à l'environnement dans lequel se trouve la machine tournante.

Pour remédier à cet inconvénient, on a déjà proposé de compenser les forces exercées sur le bâti d'une machine par un palier hydrodynamique en utilisant des excitateurs électrodynamiques qui exercent sur le bâti un amortissement actif tendant à réduire l'action des forces exercées par le palier hydrodynamique. Un tel dispositif qui agit directement sur la structure à stabiliser n'est pas pleinement satisfaisant car son action ne permet pas d'éviter des vibrations résiduelles et surtout Cil n'est pas possible de réaliser un dispositif compact.

On connait également par le document de brevet US-A-4 626 754 un dispositif de réduction des vibrations des machines tournantes applicable dans le cas où le rotor est monté sur le bâti à l'aide d'une suspension magnétique active comprenant au moins un palier magnétique radial. Selon ce dispositif, des détecteurs de vibration disposés sur le bâti permettent, par l'intermédiaire des circuits d'asservissement des paliers magnétiques actifs, de réduire les vibrations auxquelles est soumis le bâti. Une telle suspension magnétique active du rotor pourrait donc être juxtaposée à une suspension à paliers hydrodynamiques pour compenser, par la raideur négative des paliers magnétiques, les forces perturbatrices créées par les paliers hydrodynamiques. Cette solution présente cependant des inconvénients du fait qu'elle ne peut empêcher l'apparition sur le stator de couples parasites dus à la juxtaposition de paliers magnétiques et de paliers hydrodynamiques décalés axialement.

La présente invention a pour but de remédier aux inconvénients précités et de réduire efficacement, et même annuler, à l'aide d'un dispositif compact, les vibrations engendrées dans le bâti d'une machine tournante du fait de la présence d'un palier fluide de support du rotor de la machine.

Ces buts sont atteints grâce à un palier fluide hybride du type défini en tête de la description, caractérisé en ce que la pièce tubulaire est constituée en un matériau non métallique et présente une épaisseur comprise entre environ 1,5 et 3 millimètres, en ce que l'arbre rotatif est muni d'une armature annulaire composée de tôles rectifiées qui s'étend axialement au moins sur une partie de la zone périphérique de l'arbre située en regard des évidements ménagés dans la pièce tubulaire, en ce qu'une armature fixe composée d'un empilage de tôles définissant une série de pôles et d'encoches est montée de façon concentrique à la pièce tubulaire du côté opposé à la surface de portée, et de manière à s'étendre axialement en face de la zone de l'arbre munie de ladite armature annulaire, et en ce que des enroulements d'électroaimant sont disposés dans les encoches autour des pôles de l'armature fixe et sont alimentés à partir de boucle d'asservissement recevant les signaux d'au moins un détecteur de vibrations disposé au voisinage du palier fluide sur le corps fixe.

Les moyens électromagnétiques incorporés dans le palier fluide permettent ainsi, sous une forme compacte, et sans introduire de couple parasite, de modifier la raideur du palier fluide et, par la raideur négative conférée par les moyens électromagnétiques, de compenser les forces perturbatrices créées par le palier fluide du fait des défauts d'équilibrage du rotor.

La pièce tubulaire, dont l'épaisseur est de préférence de l'ordre de 2 mm, est avantageusement en céramique et ainsi n'introduit pas de perturbations au niveau de l'entrefer défini entre l'armature fixe et l'armature solidaire de l'arbre rotatif.

Conformément à l'invention, au moins deux détecteurs de vibration à axes non parallèles perpendiculaires à l'axe de l'arbre rotatif sont disposés sur le bâti au voisinage du palier et les boucles d'asservissement recevant les signaux des détecteurs de vibration sont constituées par des chaînes de contre-réaction sélective à bande étroite et à grand gain dont la fréquence centrale est synchronisée avec une fréquence de référence fo constituée par la fréquence de rotation de l'arbre ou une fréquence harmonique de cette fréquence de rotation.

Selon une caractéristique avantageuse, les enroulements d'électroaimant sont alimentés à partir de boucles d'asservissement, dont certaines au moins reçoivent les signaux d'au moins un détecteur de la position radiale de l'arbre, disposé à proximité immédiate du palier fluide.

Dans ce cas, les moyens électromagnétiques peuvent servir de palier magnétique de secours pouvant jouer un rôle porteur en cas de défaillance des moyens de support à fluide.

D'autres caractéristiques et avantages de l'invention ressortiront de la description suivante de modes particuliers de réalisation de l'invention, donnés à titre d'exemple en référence aux dessins annexés sur lesquels :

- La figure 1 est une vue schématique montrant les éléments essentiels d'un palier fluide hybride selon l'invention,

- la figure 2 est un schéma symbolique équivalent au schéma de la figure 1,
- la figure 3 est une vue en demi-coupe axiale d'un palier fluide hybride selon l'invention, selon le plan III-III de la figure 4, et
- la figure 4 est une vue en coupe selon le plan IV-IV de la figure 3.

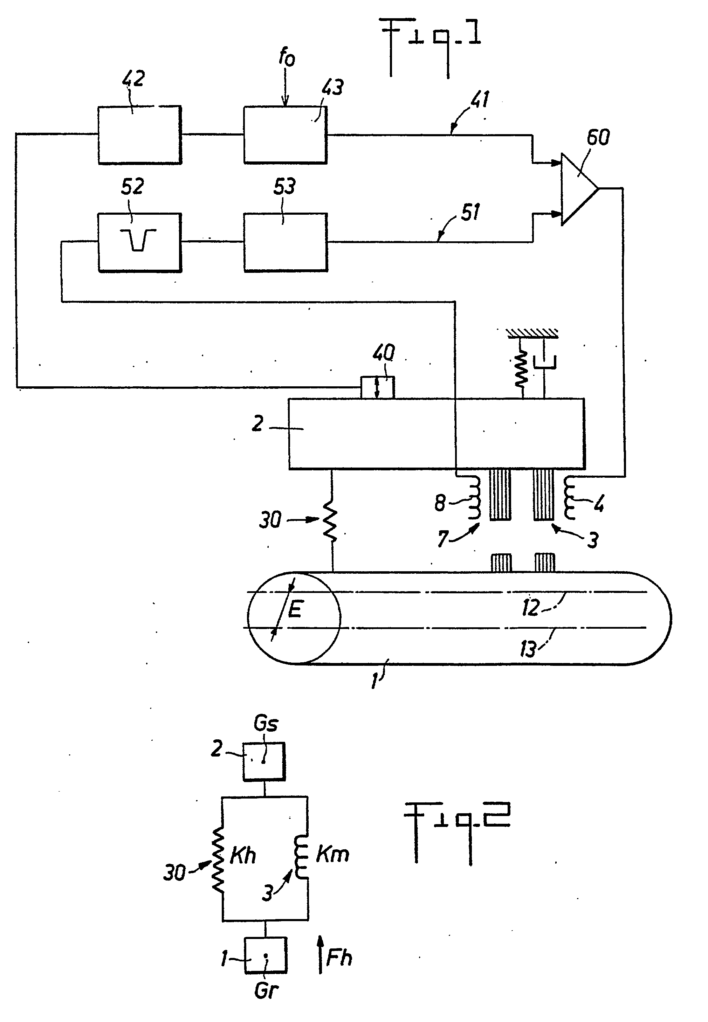

On a représenté de façon schématique sur la figure 1 les éléments essentiels d'une machine tournante qui comprend un rotor 1 monté à l'intérieur d'un bâti 2 à l'aide d'au moins un palier fluide 30. La ligne en traits mixtes 12 représente l'axe d'inertie du rotor 1,qui est distinct de l'axe géométrique du rotor 1 et présente par rapport à l'axe 13 (également représenté en traits mixtes) du palier fluide 30 un excentrement E.

En l'absence de tout dispositif de compensation, le palier fluide 30, qui, dans la suite de la description, sera considéré comme un palier du type hydrodynamique transmet au bâti 2 une force Fh proportionnelle à la raideur Kh du palier hydrodynamique 30 et à l'excentrement E susdéfini.

La configuration du palier hydrodynamique hybride selon l'invention a pour but d'atteindre l'immobilité du bâti 2 par suppression de la transmission des forces du rotor 1 vers le bâti 2 en annulant la raideur globale de l'ensemble du palier constitué de moyens de support hydrodynamiques 30 et de moyens électromagnétiques 3 asservis incorporés dans le palier hydrodynamique et agissant à la manière d'un palier magnétique radial actif.

Il en résulte que le rotor 1 tourne alors autour de son axe d'inertie 12 et il n'y a plus de force due au balourd.

Si E est l'excentrement du rotor 1, c'est-à-dire la distance entre l'axe d'inertie 12 et l'axe 13 du palier hydrodynamique 30, et si Kh est la raideur du palier hydrodynamique 30 non muni de moyens électromagnétiques auxiliaires, la force Fh transmise au bâti 2 du fait de la présence du palier hydrodynamique 30 est proportionnelle à E et à Kh. Pour compenser cette force Fh, les moyens électromagnétiques auxiliaires 3 incorporés dans le palier hydrodynamique 30 doivent fournir une force Fh égale à - Fm, c'est-à-dire doivent présenter une raideur négative Km qui compense la raideur Kh du palier hydrodynamique.

Ceci est possible dans une bande de fréquences de faible largeur centrée sur une fréquence déterminée fo correspondant à la fréquence de rotation instantanée du rotor 1 ou à une fréquence harmonique de celle-ci. Pour cela, un capteur de vibration 40 placé sur le bâti 2 de la machine au voisinage du palier hydrodynamique 30 délivre des signaux à un circuit intégrateur d'entrée 42 d'une boucle de contre-réaction comprenant un filtre passe-bande 43 centré sur la fréquence déterminée fo. Les signaux de sortie du filtre passe-bande 43 sont ensuite appliqués à un amplificateur de puissance 60 alimentant les enroulements 4 des moyens électromagnétiques 3 incorporés au palier hydrodynamique. Un "trou de raideur" est ainsi créé à partir des signaux délivrés par les détecteurs de vibration 40 placés sur le bâti et permet de compenser la raideur Kh des moyens hydrodynamiques de support.

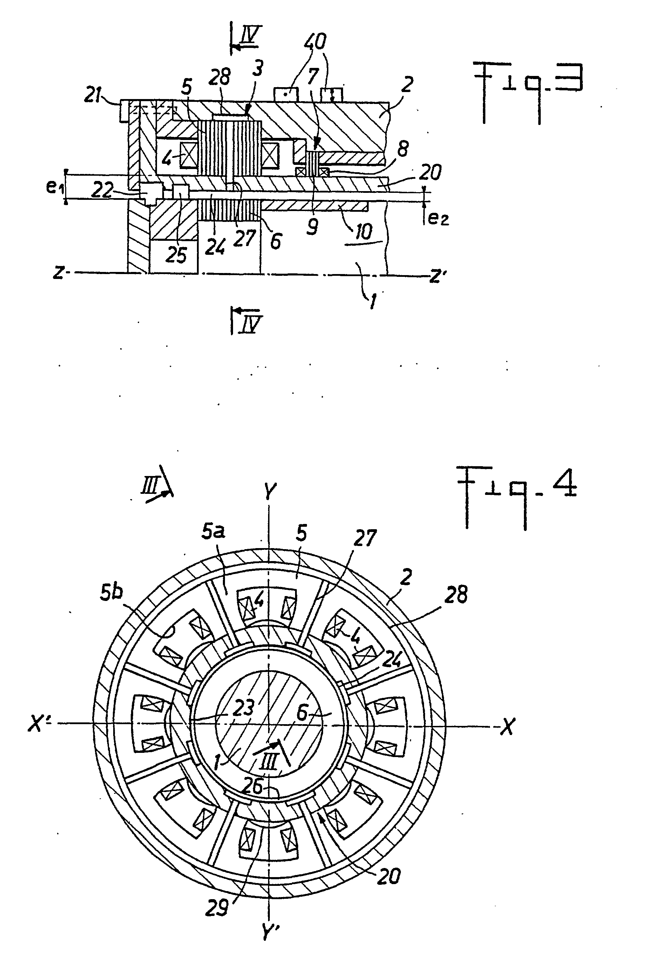

La figure 2 montre de façon symbolique la force Fh créée sur le bâti 2 (dont le centre de gravité est $G_s$) du fait du palier hydrodynamique par suite de l'existence d'un balourd sur le rotor 1 de centre de gravité $G_r$. La présence de moyens électromagnétiques auxiliaires 3 permet de créer une raideur négative Km compensant la raideur des moyens de support à fluide 30.

Les détecteurs de vibration 40 placés sur le bâti de la machine sont constitués par des accéléromètres ou des détecteurs de vitesse et comprennent au moins deux détecteurs dont les axes de sensibilité sont orientés selon deux directions X'X et Y'Y perpendiculaires entre elles et perpendiculaires à l'axe ZZ' du rotor 1.

On n'a représenté sur la figure 1 que les boucles d'asservissement correspondant à la direction X'X qui servent commander le courant circulant dans les enroulements 4 des moyens électromagnétiques 3 qui agissent selon la direction X'X. Des boucles d'asservissement tout-à-fait similaires sont utilisées pour commander le courant circulant dans les enroulements 4 des moyens électromagnétiques 3 qui agissent selon la direction Y'Y, à partir de détecteurs dont l'axe de sensibilité est orienté selon la direction Y'Y.

Les signaux issus des détecteurs de vibration 40 sont appliqués à des circuits intégrateurs 42 qui effectuent une simple intégration, si les détecteurs 40 sont des capteurs de vitesse, ou une double intégration si les détecteurs 40 sont des accéléromètres.

Les signaux issus du circuit intégrateur 42 sont ensuite appliqués à un filtre passe-bande 43 centré sur une fréquence de rotation fo . La fréquence fo peut correspondre à la fréquence de rotation f du rotor 1 si les vibrations auxquelles est soumis le bâti 2 en l'absence de moyens de compensation 3 proviennent essentiellement de la présence du palier hydrodynamique 30 en tant que tel. Toutefois, d'autres éléments annexes portés par le rotor 1 tels que des joints d'étanchéité, peuvent se comporter comme des pseudo-paliers et peuvent créer des perturbations à des fréquences 2f, 3f... harmoniques de la fréquence de rotation du rotor 1. On procède avantageusement, dans un premier temps, à l'aide d'un analyseur de spectre, à partir des signaux fournis par les détecteurs de vibration 40, au recensement des fréquences de vibration stables dans le temps qui en principe correspondent à un multiple f, 2f, 3f de la vitesse de rotation du rotor, pour ensuite utiliser des filtres 43 centrés sur des fréquences fo correspondant aux fréquences précédemment repérées par analyse de Fourier.

Les détecteurs de vibration 40 servent ainsi à commander la compensation des vibrations répétitives naissant au niveau du rotor 1 et qui, en l'absence de moyens de compensation 3, se répercutent sur le bâti 2.

La boucle d'asservissement 41, qui comprend essentiellement un détecteur de vibration 40, un circuit intégrateur 42, un filtre passe-bande 43 et un amplificateur 60 d'alimentation des enroulements 4 d'électroaimants du palier 3, constitue une boucle de contre-réaction sélective à bande étroite et grand gain. Dans la boucle d'asservissement 41, on a représenté un simple amplificateur de sortie 60 mais celui-ci peut naturellement être associé de façon classique à des circuits déphaseurs pour alimenter des enroulements 4 diamétralement opposés disposés selon une même direction X'X ou Y'Y.

Les moyens électromagnétiques 3 peuvent être commandés en force de façon simple à partir des signaux délivrés par les détecteurs de vibration 40 situés sur le bâti à proximité immédiate du palier hydrodynamique 30. Dans ce cas, les moyens électromagnétiques 3 correspondent à un palier magnétique actif sans rôle porteur qui ne joue qu'un simple rôle de compensation et ne coopère pas avec des détecteurs de déplacement. La compensation effectuée par le palier magnétique 3 à partir des détecteurs de vibration 40 vise essentiellement contrebalancer l'effet perturbateur dû au balourd et transmis par les moyens de support hydrodynamique 30. Toutefois, le palier magnétique 3 peut aussi de la même manière contribuer à amortir sur le bâti 2 des résonances mécaniques ayant d'autres origines.

De façon avantageuse, un détecteur 7 de la position radiale du rotor 1 par rapport au bâti 2 est également utilisé pour permettre, par une boucle d'asservissement 51, un asservissement de position à l'aide du palier magnétique 3 afin de faire jouer à ce dernier le rôle de palier porteur en cas de défaillance des moyens de support à fluide 30. Le palier magnétique 3 incorporé au palier hydrodynamique 30 assure ainsi également le rôle d'un palier de secours, sans que la structure d'ensemble soit modifiée.

La position statique du rotor 1 par rapport au bâti 2 est commandée l'aide d'une boucle de contre-réaction 51 classique qui reçoit les signaux délivrés par un détecteur 7 détectant la position du rotor 1 par rapport au bâti 2. Le détecteur 7 peut être de type inductif et comprend des éléments de détection de position orientés selon les deux directions perpendiculaires X'X et Y'Y. Chacune des deux boucles de contre-réaction 51 qui effectuent l'asservissement en position du rotor 1 selon les directions X'X et Y'Y comprend un reseau correcteur 53 de traitement de signal par exemple du type PID, c'est-à-dire à action proportionnelle, intégrale et dérivée. Les signaux issus du réseau correcteur 53, auquel est en principe associé un linéarisateur sont appliqués à l'amplification sommateur 60.

Un réseau 52 d'équilibrage automatique du rotor 1 peut être incorporé dans la boucle d'asservissement 51 afin d'éviter que le détecteur de position 7 transmette au palier magnétique 3 un signal d'erreur lié à l'excentricité entre l'axe du détecteur de position 7 et l'axe de rotation du rotor 1. Le réseau d'équilibrage automatique 52 peut être réalisé par exemple de la manière décrite dans le brevet US-A-4 121 143.

On décrira maintenant en référence aux figures 3 et 4 un exemple d'agencement des moyens électromagnétiques 3 au sein même du palier hydrodynamique 30 afin de réaliser un palier hybride qui est compact, de structure simple, à même d'éviter la création de couples parasites dûs à l'intéraction entre les efforts dûs au support 30 de type hydrodynamique et les efforts de type magnétique, tout en supprimant efficacement les vibrations au niveau du bâti 2.

Le palier hydrodynamique hybride des figures 3 et 4 comprend une pièce tubulaire fixe 20 en matériau non métallique, et non conducteur, par exemple en céramique, qui est solidaire du bâti 2 et présente un alésage interne formant une surface cylindrique 23 de portée ménageant un léger jeu de base 26 par rapport à la surface périphérique du rotor 1.

Des évidements 24, à effet hydrodynamique dans le cas d'un palier fluide de type hydrodynamique, sont formés dans la surface cylindrique 23 de manière à former un jeu d'épaisseur $e_2$ par rapport à la surface périphérique du rotor 1 (figure 3), le jeu d'épaisseur $e_2$ étant plus grand que le jeu de base. Les évidements 24 sont répartis régulièrement dans le sens circonférentiel sur la surface de portée 23 comme représenté sur la figure 4. Des passages annulaires 25 concentriques au rotor 1 et en communication avec les évidements 24, peuvent être formés de part et d'autre des évidements 24, c'est-à-dire décalés axialement, pour assurer l'alimentation en fluide des évidements 24 et l'évacuation du fluide hors de ces évidements. Des joints d'étanchéité 22 sont en outre prévus à chaque extrémité du palier hydrodynamique.

Selon un mode de réalisation avantageux représenté sur les figures 3 et 4, l'injection de fluide dans les alvéoles 24 est réalisée radialement par des canaux 27 ménagés à travers les pôles 5a de l'armature statorique fixe 5 et dans la pièce tubulaire 20 de manière déboucher dans les alvéoles 24 qui dans ce cas sont situés chacun dans le prolongement d'un pôle 5a. Le fluide injecté par les orifices 27 est amené à travers une gorge annulaire 28 formée dans le bâti 2 à la périphérie de l'armature statorique 5. L'évacuation du fluide peut s'effectuer par une gorge telle que la gorge 25 de la figure 3 qui est en communication avec les alvéoles 24. Naturellement, d'autres configurations connues dans le domaine des paliers fluides peuvent être utilisées dans la mesure où elles sont compatibles avec la présence de l'armature 5.

Afin de garantir l'étanchéité au niveau de l'empilage de tôles constituant l'armature statorique 5, on procède à un surmoulage de l'armature 5 à l'aide d'une matière non magnétique avant de rapporter la pièce tubulaire 20 sur les extrémités des pôles 5a de l'armature 5.

La pièce tubulaire 20 est fixée au bâti 2 par des moyens de liaison 21 et repose par sa face cylindrique externe, non munie d'évidements, sur les faces d'extrémités des pôles 5a de l'armature statorique 5 du palier magnétique 3 qui est imbriqué dans le palier hydrodynamique. Le rotor 1 proprement dit porte à sa périphérie, dans la zone située en regard de l'armature statorique 5, une armature 6 constituée par un empilement de tôles et dont la surface périphérique extérieure définissant le jeu de base avec la surface de portée 23 est rectifiée.

L'armature statorique 5 du palier magnétique 3 comprend elle-même un empilement de tôles munies d'encoches 5b formant des logements pour les enroulements d'électroaimants 4 bobinés autour des pôles saillants 5a de l'armature 5 sur lesquels porte la pièce tubulaire 20.

L'entrefer e1 ménagé entre les pôles 5a de l'armature statorique fixe 5 et l'armature annulaire 6 solidaire du rotor 1 est compris entre environ 1,5 et 3 mm et est de préférence de l'ordre de 2 mm. Cet entrefer relativement important est conditionné pour l'essentiel par l'épaisseur de la pièce tubulaire 20 qui constitue la chemise du palier hydrodynamique 30 proprement dit. La pièce tubulaire 20 peut être renforcée par exemple dans les parties situées en regard des encoches 5b de l'armature statorique.

Les détecteurs de vibration 40 sont disposés sur le bâti 2 au voisinage immédiat du palier magnétique 3. En cas d'utilisation d'un détecteur 7 de la position radiale du rotor 1, ce détecteur est placé à proximité immédiate du palier magnétique 3, en regard d'une armature annulaire 10 formée sur le rotor 1 côté de l'armature 6 du palier magnétique 3. Le détecteur de position 7 est avantageusement de type inductif avec plusieurs bobinages 8 montés sur une armature fixe 9 dont l'extrémité est en contact avec la face de la pièce tubulaire 20 non munie d'évidements, et coopère avec l'armature 10 solidaire du rotor 1 et située de l'autre côté de la pièce tubulaire 20.

Comme on l'a représenté sur la figure 4, les électroaimants du palier magnétique 3 sont disposés par paires suivant deux axes orthogonaux fixes X'X et Y'Y, perpendiculaires l'axe de rotation Z'Z défini par le palier, les deux électroaimants d'une même paire étant diamétralement opposés et exerçant chacun une action attractive sur l'armature 6 du rotor 1 lorsque les enroulements correspondants sont alimentés. Dans l'exemple illustré, chaque électroaimant comporte deux enroulements 4 connectés en série.

Le palier fluide hybride selon l'invention permet de conserver les avantages des paliers fluides notamment la possibilité de faire face à des surcharges intenses et brèves tout en supprimant de façon radicale, à l'aide des moyens électromagnétiques intégrés au palier, les perturbations susceptibles d'être créées sur le bâti du fait de la présence de palier de type à film de fluide. L'invention est ainsi particulièrement applicable aux grosses machines tournantes lentes.

**Revendications**

1. Palier fluide hybride pour arbre rotatif (1) soumis des charges radiales, comprenant un corps fixe (2), une pièce tubulaire (20) montée l'intérieur du corps fixe (2) et présentant un alésage intérieur qui définit une surface cylindrique de portée (23) avec un léger jeu de base (26) par rapport à l'arbre (1), une série d'évidements (24) formés dans la surface cylindrique de portée (23) et répartis sur la circonférence de la pièce tubulaire (20), des moyens (27, 28, 25) d'alimentation des évidements (24) en fluide et d'évacuation du fluide hors des évidements (24), et des moyens d'étanchéité (22) formés entre la pièce tubulaire (20) et l'arbre (1) de part et d'autre de la partie de la pièce tubulaire (20) munie d'évidements, caractérisé en ce que la pièce tubulaire (20) est constituée en un matériau non métallique et présente une épaisseur comprise entre environ 1,5 et 3 millimètres, en ce que l'arbre rotatif (1) est muni d'une armature annulaire (6) composée de tôles rectifiées qui s'étend axialement au moins sur une partie de la zone périphérique de l'arbre située en regard des évidements (24) ménagés dans la pièce tubulaire (20), en ce qu'une armature fixe (5) composée d'un empilage de tôles définissant une série de pôles (5a) et d'encoches (5b) est montée de façon concentrique à la pièce tubulaire (20) du côté opposé à la surface de portée (23), et de manière à s'étendre axialement en face de la zone de l'arbre (1) munie de ladite armature annulaire (6), et en ce que des enroulements d'électroaimant (4) sont disposés dans les encoches (5b) autour des pôles (5a) de l'armature fixe (5) et sont alimentés à partir de boucles d'asservissement (41) recevant les signaux d'au moins un détecteur de vibrations (40) disposé au voisinage du palier sur le corps fixe (2).

2. Palier selon la revendication 1, caractérisé en ce que la pièce tubulaire (20) présente une épaisseur de l'ordre de 2 mm.

3. Palier selon la revendication 1 ou la revendication 2, caractérisé en ce que la pièce tubulaire (20) est en céramique.

4. Palier selon l'une quelconque des revendications 1 à 3, caractérisé en ce que les enroulements d'électroaimant (4) sont alimentés à partir de boucles d'asservissement (41, 51), dont certaines au moins reçoivent les signaux d'au moins un détecteur (7) de la position radiale de l'arbre (1), disposé proximité immédiate du palier hydrodynamique.

5. Palier selon la revendication 4, caractérisé en ce que le détecteur (7) de la position radiale de l'arbre (1) est de type inductif.

6. Palier selon l'une quelconque des revendications 1 à 5, caractérisé en ce que qu'il comprend au moins deux détecteurs de vibration (40) à axes non parallèles perpendiculaires à l'axe ZZ' de l'arbre (1) et disposés sur le bâti (2) et en ce que les boucles d'asservissement (41) recevant les signaux des détecteurs de vibration (40) sont constituées par des chaînes de contre-réaction sélective à bande étroite et à grand gain dont la fréquence centrale est synchronisée avec une fréquence de référence (fo) constituée par la fréquence de rotation de l'arbre (1) ou une fréquence harmonique de cette fréquence de rotation.

7. Palier selon la revendication 6, caractérisé en ce que les détecteurs de vibration (40) son constitués par des accéléromètres et en ce que les boucles d'asservissement (41) recevant les signaux des détecteurs de vibration (40) comprennent un circuit d'entrée (42) effectuant une double intégration.

8. Palier selon la revendication 6, caractérisé en ce que les détecteurs de vibration (40) sont constitués par des détecteurs de vitesse et en ce que les boucles d'asservissement (41) recevant les signaux des détecteurs de vibration (40) comprennent un circuit d'entrée (42) effectuant une intégration simple.

9. Palier selon l'une quelconque des revendications 1 à 8, caractérisé en ce que l'armature ferromagnétique fixe (5) est munie d'un surmoulage en matière non magnétique avant d'être mise en contact avec la pièce tubulaire (20).

10. Palier selon l'une quelconque des revendications 1 à 9, caractérisé en ce q ue les évidements (24) sont ménagés dans des portions de la pièce tubulaire (20) situées dans le prolongement des pôles (5a) de l'armature fixe (5) et en ce que des canaux (28) d'injection de fluide dans les évidements (24) sont formés radialement à travers les pôles (5a) de l'armature statorique fixe (5) et la pièce tubulaire (20).

## Claims

1. Hybrid fluid bearing for a rotary shaft (1) subjected to radial loads, comprising a fixed body (2), a tubular part (20) mounted inside the fixed body (2) and having an internal bore which defines a cylindrical bearing surface (23) that leaves a small basic clearance (26) about the shaft (1), a series of recesses (24) formed in said cylindrical bearing surface (23) and distributed around the circumference of the tubular part (20), means (27, 28, 25) for feeding the recesses (24) with fluid and for evacuating fluid from the recesses (24), and sealing means (22) formed between the tubular part (20) and the shaft (1) on either side of the portion of the tubular part (20), provided with recesses, characterized in that the tubular part (20) is made of a non-metallic material and has a thickness lying between about 1.5 mm and about 3 mm, in that the rotary shaft (1) is provided with an annular magnetic circuit (6) constituted by rectified laminations which extend axially over at least a portion of the peripheral zone of the shaft facing the recesses (24) provided in the tubular part (20), in that a fixed magnetic circuit (5) constituted by a stack of laminations defining a series of poles (5a) and notches (5b) is mounted concentrically about the tubular part (20) on the opposite side thereof from its bearing surface (2b), and in such a way as to extend axially over the zone of the shaft (1) which is provided with said annular magnetic circuit (6), and in that electromagnetic windings (4) are disposed in said notches (5b) around said poles (5a) of the fixed magnetic circuit (5) and are fed from servocontrol loops (41) receiving the signals from at least one vibration detector (40) disposed on said fixed body (2) in the vicinity of the bearing.

2. Bearing according to claim 1, characterized in that the tubular part (20) is about 2 mm thick.

3. Bearing according to claim 1 or claim 2, characterized in that the tubular part (20) is made of ceramics.

4. Bearing according to any one of claims 1 to 3, characterized in that the electromagnet windings (4) are fed from servocontrol loops (41, 51), at least some of which receive signals from at least one detector (7) disposed in the immediate proximity of the hydrodynamic bearing for detecting the radial position of the shaft (1).

5. Bearing according to claim 4, characterized in that the detector (7) for detecting the radial position of the shaft (1) is of the inductive type.

6. Bearing according to any one of claims 1 to 5, characterized in that it comprises at least two vibration detectors (40) having non-parallel axes perpendicular to the axis ZZ' of the shaft (1) and disposed on the fixed body (2), and in that the servocontrol loops (41) receiving the signals from the vibration detectors (40) are constituted by high-gain narrowband selective feedback circuits having a center frequency synchronized with a reference frequency (fo) constituted by the rotation frequency of the shaft (1) or a harmonic frequency of said rotation frequency.

7. Bearing according to claim 6, characterized in that the vibration detectors (40) are constituted by accelerometers and in that the servocontrol loops (41) receiving the signals from the vibration detectors (40) include an input circuit (42) performing a double integration.

8. Bearing according to claim 6, characterized in that the vibration detectors (40) are constituted by speed detectors, and in that the servocontrol loops (41) receiving the signals from the vibration detectors (40) include an input circuit (42) performing a single integration.

9. Bearing according to any one of claims 1 to 8, characterized in that the fixed ferromagnetic circuit (5) is coated in a non-metallic material prior to being put into contact with the tubular part (20).

10. Bearing according to any one of claims 1 to 8, characterized in that the recesses (24) are provided in portions of the tubular part (20) situated in extension of the poles (5a) of the fixed magnetic circuit (5), and in that the recesses (24) are formed radially through the poles (5a) of the fixed magnetic circuit (5) and through the tubular part (20).

## Patentansprüche

1. Hybrides Flüssigkeitslager für Drehwelle (1), welche radialen Lasten unterworfen ist, mit einem festen Körper (2), einem rohrförmigen Teil (20), das im Inneren des festen Körpers (2) angeordnet ist und eine Innenbohrung aufweist, die eine zylindrische Tragoberfläche (23) definiert mit einem leichten Basisspiel (26) bezüglich der Welle (1), einer Reihe von Ausnehmungen (24), die in der zylindrischen Tragfläche (23) ausgebildet und am Umfang des rohrförmigen Teils (20) verteilt sind, Einrichtungen (27, 28, 25) zum Zuführen von Fluid zu den Ausnehmungen (24) und zum Herausbringen von Fluid aus den Ausnehmungen (24) und mit Dichtungseinrichtungen (22), die zwischen dem rohrförmigen Teil (20) und der Welle (1) beiderseits des mit Ausnehmungen versehenen Bereichs des rohrförmigen Teils (20) ausgebildet sind, dadurch gekennzeichnet, daß das rohrförmige Teil (20) aus einem nichtmetallischen Material gebildet ist und eine Dicke zwischen ungefähr 1,5 und 3,0 mm aufweist, daß die Drehwelle (1) mit einer rohrförmigen Armatur (6) versehen ist, die aus gerichteten Blechen zusammengesetzt ist, die sich axial wenigstens über einen Bereich der Umfangszone der Welle erstreckt, die den in dem rohrförmigen Teil (20) ausgebildeten Ausnehmungen (24) gegenüberliegt, daß eine feste Armatur (5), die aus einer Blechschichtung zusammengesetzt ist, die eine Reihe von Polen (5a) und Kerben (5b) definieren, auf konzentrischen Weise zum rohrförmigen Teil (20) auf der der Tragfläche (23) gegenüberliegenden Seite angebracht ist, und auf solche Weise, um sich axial gegenüber der Zone der Welle (1) zu erstrecken, die mit der ringförmigen Armatur (6) versehen ist, und daß Elektromagnetwicklungen (4) in den Kerben (5b) um die Pole (5a) der festen Armatur (5) angeordnet sind und ausgehend von Regelkreisen (41) gespeist werden, die die Signale wenigstens eines Vibrationsdetektors (40) empfangen, der in der Nähe des Lagers auf dem festen Körper (2) angeordnet ist.

2. Lager nach Anspruch 1, dadurch gekennzeichnet, daß das rohrförmige Teil (20) eine Dicke in der Größenordnung von 2,0 mm aufweist.

3. Lager nach Anspruch 1 oder 2, dadurch gekennzeichnet, daß das rohrförmige Teil (20) aus Keramik besteht.

4. Lager nach einem der Ansprüche 1 bis 3, dadurch gekennzeichnet, daß die Elektromagnetspulen (4) ausgehend von Regelkreisen (41, 51) gespeist werden, von dddenen einige wenigstens die Signale wenigstens eines Detektors (7) der Radialstellung der Welle (1) empfangen, der unmittelbar in der Nähe des hydrodynamischen Lagers angeordnet ist.

5. Lager nach Anspruch 4, dadurch gekennzeichnet, daß der Detektor (7) der Radialstellung der Welle (1) vom induktiven Typ ist.

6. Lager nach einem der Ansprüche 1 bis 5, dadurch gekennzeichnet, daß es wenigstens zwei Vibrationsdetektoren (40) aufweist, die nicht parallele, zur Achse ZZ' der Welle (1) senkrecht verlaufende Achsen aufweisen und auf dem Aufbau (2) angeordnet sind, und daß die die Signale der Vibrationsdetektoren (40) aufnehmenden Regelkreise (41) durch Gegenkoppelschleifen gebildet sind, die schmalbandig und mit großer Verstärkung selektiv sind, von denen die Mittenfrequenz mit einer Referenzfrequenz $(f_o)$ synchronisiert ist, die von der Drehfrequenz der Welle (1) oder einer harmonischen Frequenz dieser Drehfrequenz gebildet ist.

7. Lager nach Anspruch 6, dadurch gekennzeichnet, daß die Vibrationsdetektoren (40) aus Beschleunigungsmessern gebildet sind und daß die Regelkreise (41), die die Signale der Vibrationsdetektoren (40) empfangen, einen Eingangsschaltkreis (42) aufweisen, der eine doppelte Integration durchführt.

8. Lager nach Anspruch 6, dadurch gekennzeichnet, daß die Vibrationsdetektoren (40) aus Geschwindigkeitsdetektoren gebildet sind und daß die Regelkreise (41), die die Signale der Vibrationsdetektoren (40) empfangen, einen Eingangsschaltkreis (42) aufweisen, der eine einfache Integration durchführt.

9. Lager nach einem der Ansprüche 1 bis 8, dadurch gekennzeichnet, daß die feste ferromagnetische Armatur (5) mit einem Überzug aus nichtmagnetischem Material versehen ist, bevor sie in Kontakt mit dem rohrförmigen Teil (20) gesetzt wird.

10. Lager nach einem der Ansprüche 1 bis 9, dadurch gekennzeichnet, daß die Ausnehmungen (24) in Bereichen des rohrförmigen Teils (20) ausgebildet sind, die in der Verlängerung der Pole (5a) der festen Armatur (5) sich befinden und daß die Fluideinspritzkanäle (28) in die Ausnehmungen (24) radial durch die Pole (5a) der festen Statorarmatur (5) und des rohrförmigen Teils (20) ausgebildet sind.

Fig.1

Fig.2

Fig.3

Fig.4